# FASCICULE DE BREVET EUROPEEN

(11) **EP 1 296 908 B1**
(45) Date de publication et mention de la délivrance du brevet: **12.01.2005**
(21) Numéro de dépôt: 01947535.9
(22) Date de dépôt: 19.06.2001
(51) Int. Cl.: C04B 28/04, C04B 24/00

(54) **LIANT RAPIDE POUR BETON AUTOCOMPACTANT, UTILISATION ET APPLICATIONS D'UN TEL LIANT**
SCHNELLBINDER FÜR SELBST-VERDICHTENDEN BETON UND VERWENDUNG EINES SOLCHEN BINDEMITTELS
QUICK BINDER FOR SELF-COMPACTING CONCRETE, USE AND APPLICATIONS OF SAME

(30) Priorité: 20.06.2000 FR 0007870
(43) Date de publication de la demande: 02.04.2003
(73) Titulaire: Lafarge Aluminates, 75782 Paris Cedex 16 (FR)
(72) Inventeur: GAUDRY, Laurent, F-38080 l'ISLE d'ABEAU (FR); MAREZ, Christian, F-38300 BOURGOIN JALLIEU (FR); REVAIS, Catherine, F-38790 DIEMOZ (FR)
(74) Mandataire: Catherine, Alain
(86) Numéro de dépôt international: PCT/FR2001/001920
(87) Numéro de publication internationale: WO 2001/098229

(56) Documents cités:
- EP-A- 0 769 482
- EP-A- 0 838 444
- FR-A- 2 696 736
- FR-A- 2 763 063
- FR-A- 2 763 065

## Description

La présente invention se rapporte à un liant rapide pour béton autocompactant selon la revendication 1 ainsi qu'à une utilisation dans un béton et à des applications d'un tel liant rapide pour béton autocompactant.

Des liants rapides pour béton autocompactant sont des liants à prise et durcissement rapides, c'est-à-dire durcissant rapidement une fois mis en oeuvre et ayant des caractéristiques mécaniques importantes à court terme. De tels liants, du type mortier ou béton, ont de préférence une résistance en compression Rc d'au moins 8 MPa à 6 heures (ou même à 4 heures) et d'au moins 24 MPa à 24 h. Ces bétons autocompactants doivent avoir une durée d'ouvrabilité d'1 heure minimum et d'1 heure et demi à 2 heures maximum, sans nécessiter une quelconque vibration. L'ouvrabilité est mesurée par la hauteur d'affaissement au cône d'Abrams (selon la norme française NF P 18-451, de décembre 1981) et on estime qu'un béton est ouvrable lorsque cet affaissement est d'au moins 15cm.

L'invention est plus particulièrement destinée à la réparation urgente d'ouvrages, ou au soutènement provisoire de tunnels, galeries, ou autres ouvrages analogues.

On entend par « réparation urgente » une réparation qui doit être entreprise dans les délais les plus brefs pour permettre une remise en état de fonctionnement d'un ouvrage endommagé. Une telle réparation concerne le plus souvent des routes ou autoroutes, des pistes d'aéroport, etc. En présence de températures élevées, notamment dans des pays chauds, où la température peut dépasser 30°C, il est particulièrement difficile de transporter un mélange de liant rapide pour béton autocompactant en maintenant sa fluidité pendant le transport, jusqu'à sa mise en place. De plus, à des températures ambiantes de l'ordre de 30-40°C, que l'on rencontre souvent dans de nombreux pays chauds, les liants rapides pour béton autocompactant connus ont très vite un début de prise, ce qui rend difficile leur mise en oeuvre. Cette difficulté se rencontre notamment en réparation routière du fait de l'accélération créée par la température élevée.

On entend par « soutènement provisoire » de tunnel, la formation, sur les parois et le toit de tels ouvrages à soutenir, d'un revêtement provisoire plus ou moins épais. Ce revêtement est nécessaire pour consolider les parois de l'ouvrage et protéger ainsi le personnel, en attendant la mise en place d'un revêtement définitif de béton ou de voussoirs. Le soutènement est ainsi destiné à ne durer que peu de temps (jusqu'à deux mois maximum), et évite la pose de cintres métalliques qui retarde considérablement la durée de construction de l'ouvrage.

En tunnel, la tendance actuelle est plutôt d'utiliser la voie humide de préparation du béton (mélange du liant avec l'eau avant sa mise en place) qui pose moins de problèmes d'environnement pour le personnel.

Par ailleurs, certaines techniques de forage souterrain telles que celle du prédécoupage de saignées connue sous le nom de « PERFOREX », sont utilisées aujourd'hui avec succès. Cette technique utilise la projection d'un liant accéléré dans une saignée souvent longue et étroite (environ 20 à 30 cm d'épaisseur sur 3 à 4 mètres de longueur sur toute la partie cylindrique d'un tunnel souterrain). Elle est aujourd'hui réalisée avec des liants rapides pour béton autocompactant du type « LP2 » de la demanderesse, à base de laitier et d'aluminates de calcium.

Cependant, de tels liants ne permettent pas de remplir la saignée par pompage et coulage d'une manière satisfaisante.

Ces deux applications en réparation urgente et en soutènement provisoire nécessitent des liants aux spécificités semblables: ils doivent avoir une rhéologie adaptée, impliquant préférentiellement une durée d'ouvrabilité d'une heure minimum et d'une heure et demie à deux heures maximum et un durcissement très rapide d'éléments réparés ou des voûtes provisoires.

Ces liants doivent d'autre part être préférentiellement robustes, c'est-à-dire avoir un comportement reproductible dans une large gamme de conditions. Ainsi, il convient que leur comportement dépende le moins possible des conditions atmosphériques (température et/ou humidité), et/ou des variations de matières premières.

De plus, il est souhaitable que ces liants soient faciles à mettre en oeuvre et les plus économiques possible.

La demande de brevet européen EP-A1-0.769.482 décrit un matériau à projeter comprenant un mortier de ciment, destiné au soutènement de parois d'un tunnel. Ce matériau a une composition comprenant du ciment, par exemple du ciment Portland, du gypse et de l'aluminate de calcium. De préférence, un agent réducteur d'eau est ajouté pour améliorer la fluidité du mortier de ciment. Le gypse et l'aluminate de calcium varient dans des proportions de 0 à 25% par rapport au ciment.

Le matériau divulgué dans ce document, dans ses nombreux exemples de réalisation, ne répond pas aux spécificités mentionnées ci-dessus pour la réparation urgente ou le soutènement provisoire d'un ouvrage. En particulier, ce matériau subit un raidissement quasi instantané lorsque l'ensemble des constituants de sa composition est mélangé. De plus, les compositions divulguées sont nécessairement mises en oeuvre par projection et elles sont peu adaptées à un coulage et/ou à un pompage. Notamment, elles ne sont pas autocompactantes.

L'invention concerne un liant rapide pour béton autocompactant qui peut avoir une durée d'ouvrabilité élevée, notamment comprise entre une heure et une heure trente ou entre une heure et deux heures. Par « durée d'ouvrabilité », on entend la durée de maintien de fluidité, qui correspond au délai de début de prise.

Ces deux propriétés de maintien de fluidité et de fortes résistances à court terme, apparemment incompatibles, permettent notamment de réaliser une composition de liant en centrale de béton et de la transporter ensuite sur un chantier par camion-toupie, la composition durcissant rapidement une fois mise en oeuvre. Ces qualités du liant permettent également de le pomper mécaniquement grâce à sa fluidité et de le couler dans des saignées de tunnel en obtenant un durcissement rapide.

L'invention vise un tel liant, du type mortier ou béton, pouvant avoir une résistance en compression de l'ordre de 8 MPa à 6 h, voire à 4 h, et de 24 MPa à 24 h, mesurée sur des éprouvettes cylindriques de dimension 16cm x 32cm.

Le liant rapide pour béton autocompactant de l'invention peut également être facilement pompable ou coulable, notamment sans vibration (béton autocompactant), ce qui le rend particulièrement adapté au soutènement provisoire de galeries ou tunnels.

Le liant selon l'invention pour béton autocompactant peut permettre une mise en oeuvre facile et économique.

L'invention concerne également l'utilisation du liant rapide pour béton autocompactant de l'invention dans un béton, et les applications de ce liant rapide pour béton autocompactant au soutènement provisoire ou à la réparation urgente d'un ouvrage, y compris dans des conditions de températures ambiantes supérieures à 25°C.

A cet effet, l'invention a pour objet un liant rapide pour béton autocompactant comprenant, par rapport au poids sec du liant :
- 70à 90% de ciment Portland,
- 4 à 16% d'aluminate de calcium,
- 4 à 14% de sulfate de calcium sous forme d'anhydrite,
- un accélérateur et un retardateur, de préférence l'acide citrique et le carbonate de sodium,
- au moins un adjuvant comprenant un réducteur d'eau.

Selon l'invention:
- on peut ajouter 0 à 2% de chaux hydratée Ca(OH)2,
- le réducteur d'eau comprend au moins un superplastifiant constitué d'un composé organique hydrosoluble ou hydrodispersable, comportant au moins un groupement amino-di(alkylène-phosphonique) et au moins une chaîne polyoxyalkylée ou au moins un de ses sels.
- Le liant de l'invention diffère donc du matériau du document EP-769.482 par le fait que le réducteur d'eau comprend un ou plusieurs superplastifiants tels que définis ci-dessus et la présence éventuelle de chaux.
- Cette nouvelle composition permet de résoudre les problèmes mentionnés plus haut, et notamment la possibilité d'avoir une ouvrabilité supérieure à 1 heure, et de préférence de 1 heure et demi à 2 heures, de pomper le béton grâce à notre formule autocompactante, tout en ayant des résistances mécaniques en compression très élevées à 6 heures et à 24 heures (8 Mpa à 6 heures, et de préférence, 8 Mpa à 4 heures, et 24 Mpa à 24 heures), y compris à des températures comprises entre 10 et 35°C.

En effet, de façon surprenante, le liant rapide pour béton autocompactant de l'invention permet à la fois de retarder suffisamment le début de prise et d'obtenir d'excellentes qualités de durcissement rapide.

La durée d'ouvrabilité est un paramètre fondamental. Elle autorise la préparation de la composition dans une centrale à béton, ce qui permet d'éviter des manipulations de matières premières sur le lieu du chantier, souvent encombré, et donc d'éviter des accidents. Il rend ensuite possible un transport, par exemple par camion-toupie, de la composition, ce qui simplifie ainsi la logistique du chantier.

Un autre avantage de la composition selon l'invention est d'être pompable avec les moyens usuels des chantiers, cette composition étant coulable et autocompactante. Ainsi, sa mise en oeuvre est-elle simplifiée, car elle peut être bien coulée, même sans vibration, tout en satisfaisant au critère de résistance mécanique élevée à court terme.

De même, une autre propriété importante de la composition est sa robustesse, c'est-à-dire sa capacité à supporter les variations usuelles de granulats en maintenant la résistance mécanique du produit final. De telles variations se rencontrent fréquemment dans des centrales à béton prêt à l'emploi.

Un autre avantage est l'absence de ressuage ou de ségrégation des compositions de béton réalisées avec divers sables et granulats usuels, même avec des mesures d'affaissements au cône d'Abrams de 24cm.

De plus, le liant selon l'invention pour béton autocompactant peut être mis en oeuvre dans des conditions atmosphériques variables, de 10°C à 35°C par exemple, tout en satisfaisant au critère exigeant des résistances mécaniques élevées à court terme et en ayant une ouvrabilité satisfaisante.

Le liant est susceptible d'être livré:
- soit sous forme de prémix sec, pour la partie des constituants hors additifs liquides (et éventuellement, en variante, hors sable et agrégats), en sacs ou en vrac, pour alimenter directement le chantier de l'ouvrage où l'on effectuera le malaxage avec l'eau,
- soit sous forme de béton pour camions « toupie » à partir de centrales à béton usuelles.

Préférentiellement les adjuvants comprennent un accélérateur de prise, constituant de préférence 0,5 à 2,5% en poids sec du liant. Cet accélérateur de prise comprend avantageusement du carbonate de soude.

Les adjuvants comprennent également de manière préférée un retardateur de prise, constituant préférentiellement 0,5 à 2,5% en poids sec du liant. Ce retardateur de prise comprend avantageusement de l'acide citrique, préférentiellement sous forme monohydratée.

L'anhydrite a avantageusement une pureté supérieure à 90% et comprend avantageusement de l'anhydrite II.

De plus, l'aluminate de calcium a préférentiellement une teneur minimale de 50% en alumine.

Préférentiellement, le superplastifiant constitue environ 1,5% en poids sec du liant.

Ce superplastifiant est préférentiellement un composé (I)
ou un sel du composé (I), ce composé (I) répondant à la formule: 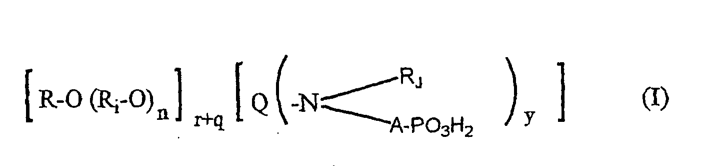 dans laquelle:
- R est un atome d'hydrogène ou un groupe hydrocarboné monovalent, saturé ou non, comportant de 1 à 18 atomes de carbone et éventuellement un ou plusieurs hétéro-atomes; R étant de préférence un atome d'hydrogène ou un groupe hydrocarboné monovalent, saturé ou non, comportant de 1 à 4 atomes de carbone, 50% à 100% des Rᵢ sont l'éthylène, 0 à 50% des éventuels autres Rᵢ sont semblables ou différents entre eux et représentent un alkylène comme l'éthylène, le propylène, le butylène, l'amylène, l'octylène ou le cyclohexène, ou un arylène comme le styrène ou le méthylstyrène, les Rⱼ renfermant éventuellement un ou plusieurs hétéro-atomes,
- Q est un groupe hydrocarboné comportant de 2 à 18 atomes de carbone et éventuellement un ou plusieurs hétéro-atomes,
- A est un groupe alkylène comportant de 1 à 3 atomes de carbone, A représentant de préférence le groupe méthylène,
- les Rⱼ sont semblables ou différents entre eux et peuvent être choisis parmi:
   * le groupe A-PO₃H₂, A ayant la signification précitée,
   * et le groupe 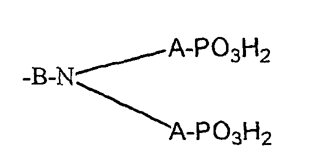
      - B désignant un groupement alkylène comportant de
      2 à 8 atomes de carbone, B représentant de préférence l'éthylène ou le propylène, A ayant la signification précitée,
- « n » est un nombre compris entre 20 et 250,
- « r » est le nombre des groupes [R-O(Rᵢ-O)ₙ] portés par l'ensemble des Rⱼ,
- « q » est le nombre des groupes [R-O(Rᵢ-O)ₙ] portés par Q,
- la somme « r+q » est au plus égale à 3,
- « y » est un nombre entier égal à 1 ou 2,
- Q, N et les Rⱼ peuvent former ensemble un ou plusieurs cycles, ce ou ces cycles pouvant en outre contenir un ou plusieurs autres hétéro-atomes.

Les sels des composés (I) peuvent être stoechiométriques ou non, mixtes ou non, et sont constitués par des métaux alcalins, des métaux alcalino-terreux, des amines ou des ammonium quaternaires.

Les composés (I) se présentent sous une forme pouvant varier de la forme liquide à la forme solide, en passant par la forme cireuse.

La catégorie de ces superplastifiants mis en oeuvre dans l'invention est connue en elle-même d'une manière générale comme fluidifiant pour suspensions aqueuses de particules minérales et pâtes de liant hydraulique, et est divulguée dans le document FR-A-2.696.736. De plus, un procédé de préparation d'un tel fluidifiant est décrit dans le document FR-A-2.689.895. On renvoie notamment au document FR-A-2.696.736 pour une description détaillée de cette catégorie des composés (I) et des sels de ces composés (I).

Le superplastifiant défini précédemment présente avantageusement les caractéristiques suivantes, prises séparément ou en association selon toutes leurs combinaisons techniquement possibles:
- R est un atome d'hydrogène,
- R est un groupe hydrocarboné monovalent, saturé ou non, comportant de 1 à 4 atomes de carbone,
- les groupes Rᵢ sont choisis parmi l'éthylène et le propylène,
- Rᵢ est majoritairement l'éthylène, le nombre de motifs d'éthylène correspondant à Rᵢ étant suffisant pour conserver le caractère hydrosoluble ou hydrodispersable du composé (I),
- Q est un groupe hydrocarboné comportant de 2 à 12 atomes de carbone, et préférentiellement de 2 à 6 atomes de carbone, et représente préférentiellement l'éthylène et /ou le propylène, ceux-ci étant avantageusement présents à raison de 95% en moles, le complément étant constitué d'autre monomères, tels que le cyclohexène ou le n-hexène,
- le groupe alkylidène A comporte de 1 à 3 atomes de carbone,
- A est le groupe méthylène,
- le groupe Rⱼ est le groupe -CH₂-PO₃H₂, éventuellement salifié, ou le groupe -C₂H₄N (CH₂-PO₃H₂)₂, éventuellement salifié, ou le groupe -C₃H₆N(CH₂PO₃H₂)₂ éventuellement salifié,
- les sels du composé (I) sont des sels de sodium, de calcium ou de diéthanolamine,
- « n » est compris entre 20 et 250, de préférence entre 30 et 150 et encore mieux entre 50 et 100,
- la somme « r+q » est inférieure à 3 et préférentiellement égale à 1,
- « y » est égal à 1.

Avantageusement, le composé (I) utilisé à titre de superplastifiant dans le liant hydraulique selon l'invention pour béton autocompactant comprend une ou plusieurs des caractéristiques ci-après:
(i) au moins 50% des Rᵢ sont l'éthylène et les éventuels autres Rᵢ sont le propylène;
(ii) Rᵢ est choisi parmi les groupes, éventuellement salifiés, -CH₂-PO₃H₂,
(iii) -C₂-H₄N(CH₂-PO₃H₂)₂ et - C₃H₆N(CH₂-PO₃H₂)₂.

De très bons résultats ont été obtenus avec un composé (I) diphosphoné dans lequel Rⱼ est l'éthylène, Rᵢ est CH₂-PO₃H₂, « n » est compris entre 30 et 150 (bornes incluses), de préférence entre 50 et 100 (bornes incluses), la somme « r+q » est égale à 1 et « y » est égal à 1.

Un composé qui a donné de très bons résultats répond à la formule (II) : 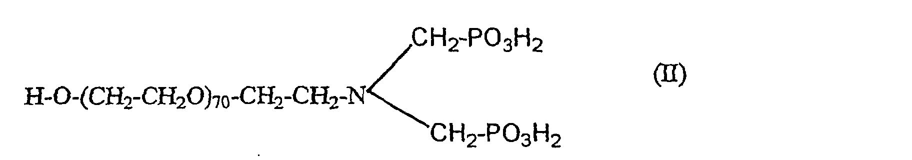 ou un de ses sels.

Avantageusement, le ciment Portland est un ciment rapide (dit de type « R »), préférentiellement broyé à une finesse d'au moins 4000 cm²/g.

Préférentiellement, le ciment est du type HRI (à Haute Résistance Initiale).

L'invention s'applique également à l'utilisation du liant selon l'invention pour béton autocompactant dans un béton.

La composition peut alors être complétée par des granulats classiques (sables, graviers et/ou cailloux).

Préférentiellement, le béton a une granulométrie inférieure ou égale à 20 mm. La composition peut ainsi être pompée facilement.

De plus, le béton a avantageusement un rapport en poids d'eau efficace sur liant sec compris entre 0,35 et 0,4 et a avantageusement un rapport en poids sec de granulats sur liant compris entre 4 et 5.

L'invention concerne aussi les applications d'un liant rapide pour béton autocompactant conforme à l'invention à un remplissage d'une saignée par pompage et/ou coulage pour le soutènement provisoire d'un ouvrage et à une réparation urgente d'un ouvrage endommagé, ainsi que son application à une mise en oeuvre dans des conditions de température ambiante supérieure à 25°C.

L'invention sera illustrée et détaillée à l'aide des exemples suivants, aucunement limitatifs.

### EXEMPLE 1

### Formulation pour le soutènement de galeries

### Composition du liant:

- ciment Portland type CEMI 52,5 R de Saint Pierre
   La Cour 81,85%
- anhydrite ICI (source CaSO₄>90%) 8,75%
- aluminate de calcium type Secar 51 BTF de
   Lafarge Aluminates 7%
- carbonate de soude Na₂CO₃ 1,7%
- acide citrique monohydraté 0,7%

### Composition du béton:

- sable 0-5 754 kg/m³
- gravier 5-12 372 kg/m³
- cailloux 12-20 723 kg/m³
- liant suivant composition donnée ci-dessus 400 kg/m³
- eau (eau efficace/liant = 0,40) 160 I
- superplastifiant amino-phosphonates commercialisé sous le nom Optima 100 en ajout dans le béton sous forme liquide 6 I

Les performances suivantes sont obtenues sur le béton (matières premières à environ 14°C).
- On observe un maintien de l'ouvrabilité pendant 1 h 15 (donc possibilité de préparation en centrale de béton prêt à l'emploi puis de transport par camion-toupie).
- On mesure l'ouvrabilité par affaissement au cône d'Abrams aux temps T (en minutes) suivants:
   T0: 23 cm
   T 15:23 cm
   T 45:20 cm
   T 60:18 cm
   T 75:16,5 cm
A T 90, le produit a perdu toute plasticité.

La prise est estimée à 1 h 55.
- On peut mettre en mettre en place ce béton sans vibration (béton auto-compactant).
- On n'observe pas de ressuage ni de ségrégation.
- Les résistances à la compression (Rc) sont mesurées sur des éprouvettes 16 cm x 32 cm et exposées dans le tableau I (avec « j » pour jour).

**TABLEAU 1**

| Echéance | Vibré | Non vibré |
|---|---|---|
| 4 h (MPa) | 8,9-11.3 | 10,8-14,9 |
| 5 h (MPa) | 13,2-15,5 | 13,7-15,5 |
| 24 h (MPa) | 28,1 | 27,1-30,9 |
| 28 j (MPa) | 47,25 | 50,35 |
| Essai de fendage à 28 jours (MPa) | 4,2 | 4,8 |

On satisfait bien aux critères de résistances mécaniques fixés, tout en ayant les conditions d'ouvrabilité requises.

On n'observe pas de désordre sur la surface des éprouvettes, leur cure n'est pas obligatoire.

### EXEMPLE 2

### Formulation pour une réparation urgente

### Composition du liant:

- ciment type HPR Siam 3 ASTM Type 3
   de Siam Cement 78,2%
- anhydrite ICI (source CaSO₄> 90%) 10%
- Secar 51 de Lafarge (source
   Aℓ₂O₃>52,5%;CaO>39%) 8%
- carbonate de soude Na₂CO₃ 1,9%
- acide citrique 1,9%
- amino-phosphonates « Optima 100 » 1,5% en ajout dans le béton sous forme liquide.

### Composition du béton:

- sable 0-5 733 kg/m³
- gravier 5-12 478 kg/m³
- cailloux 12-20 684 Kg/m³
- liant suivant composition donnée ci-dessus 400 Kg/m³
- eau (eau efficace/liant = 0,40) 160 I
Les performances suivantes sont obtenues sur un béton à 30°C.
• On observe un maintien de l'ouvrabilité pendant 1 h 45.
• On n'observe pas de ressuage ni de ségrégation.
• On mesure l'ouvrabilité par affaissement au cône d'Abrams aux temps T (en minutes) suivants :

| | |
|---|---|
| T 0 | 17cm |
| T 60 | 16cm |
| T 90 | 7 cm |
| T 105 | 5 cm |

• Les résistances à la compression (Rc) sont mesurées sur des cubes 15 cm x 15 cm (les résultats obtenus jusqu'à 24 h sont sur éprouvettes non démoulées):
Rc 33,8 MPa à 6 h
Rc 48,1 MPa à 24 h
Rc > 60 MPa à 7 j.

• On satisfait bien aux critères de résistances mécaniques fixés, tout en ayant les conditions d'ouvrabilité requises.
• On n'observe pas de désordre sur la surface des éprouvettes, leur cure n'est pas obligatoire.

### EXEMPLE 3

Cet exemple est une comparaison d'une composition selon l'invention par rapport à une composition de l'art antérieur, et notamment par rapport à une composition conforme à l'enseignement du brevet européen EP A1-0.769.482.

On mélange préalablement tous les composants secs, puis on ajoute l'eau qui contient le superplastifiant.

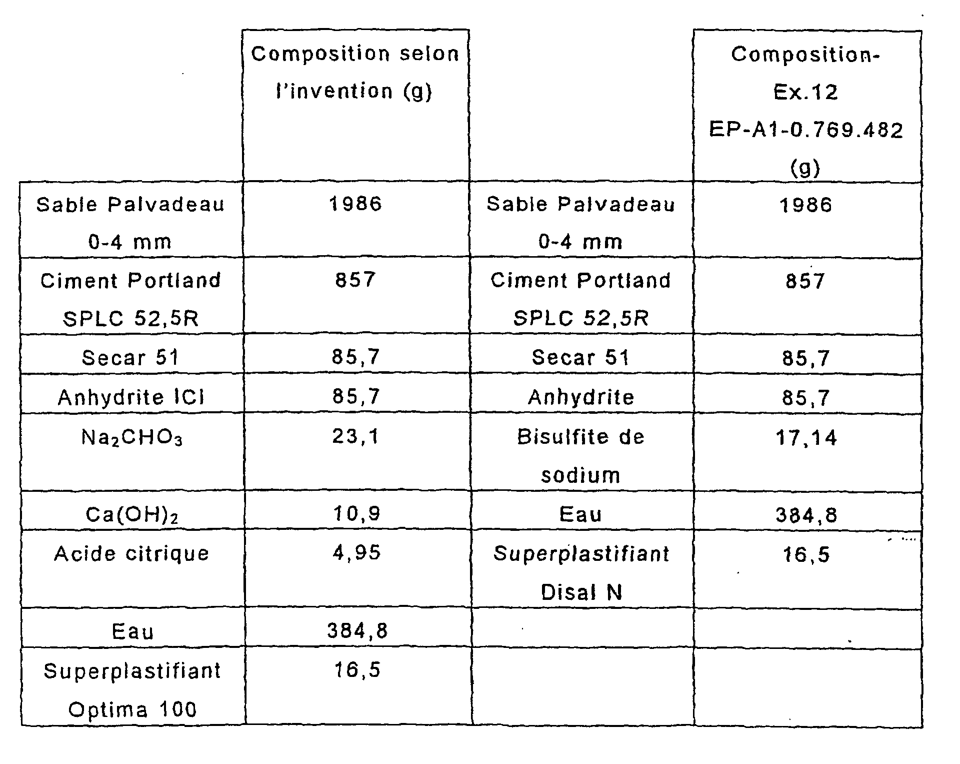

Pour la composition de l'exemple 12 du brevet EP-A1-0.769.482, les ratios ciment alumineux/ciment Portland, gypse/ciment Portland et bisulfide de sodium/ciment Portland sont ceux décrits dans l'exemple 12 du brevet.

### Comportement rhéologie, mesure d'auto-étalement, test ASTM C230 modifié

| Rhéologie | | |
|---|---|---|
| | Composition selon l'invention | Composition selon EP-A1-0.769.482 |
| Minutes | Auto-étalement ASTM en % | |
| 15 | 170 | 0 |
| 30 | 160 | 0 |
| 45 | 145 | 0 |
| 60 | 130 | 0 |

Les résultats obtenus mettent en évidence que :
- avec une composition selon l'art antérieur, comme celle de l'exemple 12 du brevet EP-A1-0.769.482, on a un raidissement quasi immédiat dès que l'ensemble des constituants est mélangé ; ce comportement rhéologique est celui recherché pour tous les matériaux destinés à être appliqués par projection ;
- avec une composition selon notre invention, proche de la précédente, mais qui comporte un superplastifiant constitué d'au moins un composé organique hydrosoluble, comportant au moins un groupement amino -di(alkylène-phosphonique), - Optima 100 commercialisé par Chryso SAS, et au moins une chaîne polyoxyalkylée, on obtient un matériau très fluide ayant un bon maintien de rhéologie dans le temps.

## Revendications

1. Liant rapide pour béton autocompactant comprenant par rapport au poids sec du liant:
• 70% à 90% de ciment Portland,
• 4 à 16% d'aluminate de calcium,
• 4 à 14% de sulfate de calcium sous forme d'anhydrite,
• un accélérateur et un retardateur,
• au moins un adjuvant comprenant un réducteur d'eau,
**caractérisé en ce que**:
• on peut ajouter 0 à 2% de chaux hydratée Ca(OH)2,
• le réducteur d'eau comprend au moins un superplastifiant constitué d'un composé organique hydrosoluble ou hydrodispersable comportant au moins un groupement amino-di(alkylène-phosphonique) et au moins une chaîne polyoxyalkylée ou au moins un de ses sels, et dans lequel ledit superplastifiant est un composé (I) ou sel du composé (I), ledit composé (I) répondant à la formule: 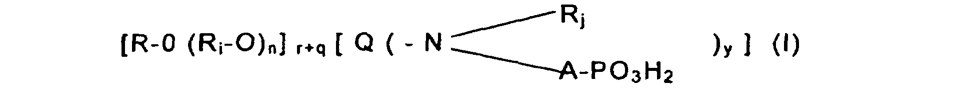
dans laquelle:
• R est un atome d'hydrogène ou un groupe hydrocarboné monovalent, saturé ou non, comportant de 1 à 18 atomes de carbone et éventuellement un ou plusieurs hétéro-atomes; R étant de préférence un atome d'hydrogène ou un groupe hydrocarboné monovalent, saturé ou non, comportant de 1 à 4 atomes de carbone, 50% à 100% des Rᵢ sont l'éthylène, 0 à 50% des éventuels autres Rᵢ sont semblables ou différents entre eux et représentent un alkylène comme l'éthylène, le propylène, le butylène, l'amylène, l'octylène ou le cyclohexène, ou un arylène comme le styrène ou le méthylstyrène; les Rᵢ renfermant éventuellement un ou plusieurs hétéro-atomes,
• Q est un groupe hydrocarboné comportant de 2 à 18 atomes de carbone et éventuellement un ou plusieurs hétéro-atomes,
• A est un groupe alkylène comportant de 1 à 3 atomes de carbone, A représentant de préférence le groupe méthylène,
• les Rᵢ sont semblables ou différents entre eux et peuvent être choisis parmi:
* le groupe A-PO₃H₂, A ayant la signification précitée,
* et le groupe 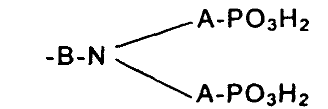
- B désignant un groupement alkylène comportant de 2 à 8 atomes de carbone, B représentant de préférence l'éthylène ou le propylène, A ayant la signification précitée,
• "n" est un nombre compris entre 20 et 250,
• "r" est le nombre des groupes [R-O(Rᵢ-O)ₙ] portés par l'ensemble des Rᵢ,
• "q" est le nombre des groupes [R-O(Rᵢ-0)ₙ] portés par Q,
• la somme "r+q" est au plus égale à 3,
• "y" est un nombre entier égal à 1 ou 2,
• Q, N et les Rᵢ peuvent former ensemble un ou plusieurs cycles, ce ou ces cycles pouvant en outre contenir ou un plusieurs autres hétéro-atomes.

2. Liant rapide pour béton autocompactant selon la revendication 1, **caractérisé en ce que** l'accélérateur de prise comprend du carbonate de soude et le retardateur de prise comprend de l'acide citrique.

3. Liant rapide pour béton autocompactant selon l'une quelconque des revendications 1 à 2, **caractérisé en ce que** lesdits adjuvants comprennent un retardateur de prise, constituant préférentiellement 0,5 à 2,5% en poids sec du liant et un accélérateur de prise constituant préférentiellement 0,5 à 2,5% en poids sec du liant.

4. Liant rapide pour béton autocompactant selon la revendication 2, **caractérisé en ce que** l'acide citrique est sous forme monohydratée.

5. Liant rapide pour béton autocompactant selon l'une quelconque des revendications 1 à 4, **caractérisé en ce que** l'anhydrite a une pureté supérieure à 90%.

6. Liant rapide pour béton autocompactant selon la revendication 5, **caractérisé en ce que** l'anhydrite comprend de l'anhydrite II.

7. Liant rapide pour béton autocompactant selon l'une quelconque des revendications 1 à 6, **caractérisé en ce que** l'aluminate de calcium a une teneur minimale de 50% en alumine.

8. Liant rapide selon l'une quelconque des revendications 1 à 7, **caractérisé en ce que** ledit superplastifiant constitue environ 1,5% en poids sec du liant.

9. Liant rapide pour béton autocompactant selon la revendication 8, **caractérisé en ce que** ledit superplastifiant est le composé de formule (II): 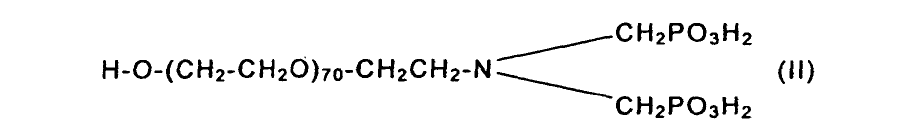 ou un de ses sels.

10. Liant rapide pour béton autocompactant selon l'une quelconque des revendications 1 à 9, **caractérisé en ce que** le ciment Portland est un ciment rapide, préférentiellement broyé à une finesse supérieure ou égale à 4000 cm²/g.

11. Utilisation du liant conforme à l'une quelconque des revendications 1 à 10, dans un béton autocompactant ayant une résistance en compression de 8 MPa minimum à 6 heures, et de préférence de 8 MPa à 4 heures, et d'au moins 24 MPa à 24 heures, avec une ouvrabilité de 1 heure minimum et de préférence de 1 heure et demi à 2 heures.

12. Utilisation du liant selon la revendication 11, **caractérisée en ce que** le béton a un rapport en poids d'eau efficace sur liant sec compris entre 0,35 et 0,4.

13. Béton autocompactant réalisé à partir du liant rapide selon les revendications 1 à 10, **caractérisé en ce que** le béton a une résistance en compression de 8 MPa minimum à 6 heures, et de préférence de 8 MPa à 4 heures, et d'au moins 24 MPa à 24 heures, avec une ouvrabilité de 1 heure minimum et de préférence de 1 heure et demi à deux heures.

14. Utilisation d'un liant rapide pour béton autocompactant conforme à l'une quelconque des revendications 1 à 10 à un remplissage d'une saignée par pompage et/ou coulage pour le soutènement provisoire d'un ouvrage.

15. Utilisation d'un liant rapide pour béton autocompactant conforme à l'une quelconque des revendications 1 à 10 à une réparation urgente d'un ouvrage endommagé.

16. Utilisation d'un liant rapide pour béton autocompactant conforme à l'une quelconque des revendications 1 à 10 à une mise en oeuvre dans des conditions de température ambiante de 10 à 35°C.

## Patentansprüche

1. Schnellbindemittel für selbstverdichtenden Beton, das Folgendes umfasst, bezogen auf das Trockengewicht des Bindemittels:
• 70% bis 90% Portland-Zement;
• 4 bis 16% Calciumaluminat;
• 4 bis 14% Calciumsulfat in Form von Anhydrit;
• einen Beschleuniger und einen Verzögerer;
• wenigstens einen Hilfsstoff, der einen Wasserreduzierer umfasst;
**dadurch gekennzeichnet, dass**:
• man 0 bis 2% gelöschten Kalk Ca(OH)₂ hinzufügen kann;
• der Wasserreduzierer wenigstens einen Superweichmacher umfasst, der aus einer wasserlöslichen oder wasserdispergierbaren organischen Verbindung, die wenigstens eine Aminodi(alkylenphosphonsäure)-Gruppe und wenigstens eine Polyalkylenoxidkette umfasst, oder wenigstens einem ihrer Salze besteht, wobei der Superweichmacher eine Verbindung (I) oder ein Salz der Verbindung (I) ist, wobei die Verbindung (I) der Formel 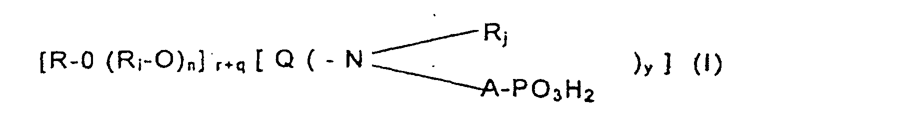 entspricht, wobei:
• R ein Wasserstoffatom oder eine gesättigte oder ungesättigte einwertige Kohlenwasserstoffgruppe ist, die 1 bis 18 Kohlenstoffatome und gegebenenfalls ein oder mehrere Heteroatome umfasst, wobei R vorzugsweise ein Wasserstoffatom oder eine gesättigte oder ungesättigte einwertige Kohlenwasserstoffgruppe ist, die 1 bis 4 Kohlenstoffatome umfasst, 50% bis 100% der Rᵢ Ethylen sind und 0 bis 50% der gegebenenfalls übrigen Rᵢ gleich oder verschieden sind und ein Alkylen, wie Ethylen, Propylen, Butylen, Amylen, Octylen oder Cyclohexen, oder ein Arylen, wie Styrol oder Methylstyrol, darstellen, wobei die Rᵢ gegebenenfalls ein oder mehrere Heteroatome umfassen;
• Q eine Kohlenwasserstoffgruppe ist, die 2 bis 18 Kohlenstoffatome und gegebenenfalls ein oder mehrere Heteroatome umfasst;
• A eine Alkylengruppe mit 1 bis 3 Kohlenstoffatomen ist, wobei A vorzugsweise eine Methylengruppe ist;
• die Rⱼ gleich oder verschieden sind und ausgewählt werden können aus:
* der Gruppe A-PO₃H₂, wobei A die zuvor genannte Bedeutung hat;
* und der Gruppe 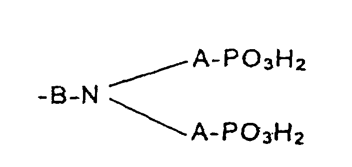
wobei B eine Alkylengruppe mit 2 bis 8 Kohlenstoffatomen ist, wobei B vorzugsweise Ethylen oder Propylen ist, wobei A die zuvor genannte Bedeutung hat;
• "n" eine Zahl von 20 bis 250 ist;
• "r" die Zahl der Gruppen [R-O(RᵢO)ₙ] ist, die an die Gesamtheit der Rⱼ gebunden sind;
• "q" die Zahl der Gruppen [R-O(Rᵢ-O)ₙ] ist, die an Q gebunden sind;
• die Summe "r+q" höchstens gleich 3 ist;
• "y" eine ganze Zahl ist, die gleich 1 oder 2 ist;
• Q, N und die Rⱼ zusammen einen oder mehrere Ringe bilden können, wobei der oder die Ringe außerdem ein oder mehrere andere Heteroatome enthalten können.

2. Schnellbindemittel für selbstverdichtenden Beton gemäß Anspruch 1, **dadurch gekennzeichnet, dass** der Abbindebeschleuniger Natriumcarbonat umfasst und der Abbindeverzögerer Zitronensäure umfasst.

3. Schnellbindemittel für selbstverdichtenden Beton gemäß einem der Ansprüche 1 bis 2, **dadurch gekennzeichnet, dass** die Hilfsstoffe einen Abbindeverzögerer, der vorzugsweise 0,5 bis 2,5%, bezogen auf das Trockengewicht des Bindemittels, ausmacht, und einen Abbindebeschleuniger, der vorzugsweise 0,5 bis 2,5%, bezogen auf das Trockengewicht des Bindemittels, ausmacht, umfassen.

4. Schnellbindemittel für selbstverdichtenden Beton gemäß Anspruch 2, **dadurch gekennzeichnet, dass** die Zitronensäure in Form des Monohydrats vorliegt.

5. Schnellbindemittel für selbstverdichtenden Beton gemäß einem der Ansprüche 1 bis 4, **dadurch gekennzeichnet, dass** das Anhydrit eine Reinheit von über 90% hat.

6. Schnellbindemittel für selbstverdichtenden Beton gemäß Anspruch 5, **dadurch gekennzeichnet, dass** das Anhydrit Anhydrit II umfasst.

7. Schnellbindemittel für selbstverdichtenden Beton gemäß einem der Ansprüche 1 bis 6, **dadurch gekennzeichnet, dass** das Calciumaluminat einen Mindestgehalt von 50% an Aluminiumoxid hat.

8. Schnellbindemittel gemäß einem der Ansprüche 1 bis 7, **dadurch gekennzeichnet, dass** der Superweichmacher ungefähr 1,5% ausmacht, bezogen auf das Trockengewicht des Bindemittels.

9. Schnellbindemittel für selbstverdichtenden Beton gemäß Anspruch 8, **dadurch gekennzeichnet, dass** es sich bei dem Superweichmacher um die Verbindung der Formel (II) 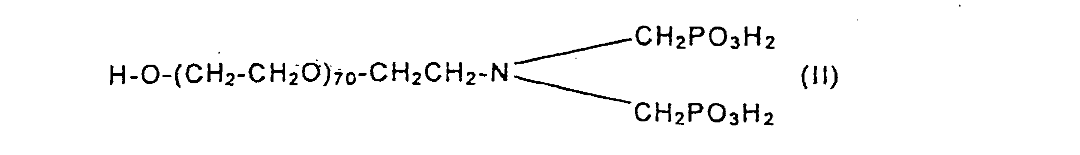 oder eines ihrer Salze handelt.

10. Schnellbindemittel für selbstverdichtenden Beton gemäß einem der Ansprüche 1 bis 9, **dadurch gekennzeichnet, dass** der Portland-Zement ein schneller Zement ist, der vorzugsweise auf eine Feinheit von größer oder gleich 4000 cm²/g gemahlen ist.

11. Verwendung des Bindemittels gemäß einem der Ansprüche 1 bis 10 in einem selbstverdichtenden Beton mit einer Druckfestigkeit von wenigstens 8 MPa bei 6 Stunden und vorzugsweise 8 MPa bei 4 Stunden sowie wenigstens 24 MPa bei 24 Stunden und einer Verarbeitungszeit von wenigstens 1 Stunde und vorzugsweise 1,5 bis 2 Stunden.

12. Verwendung des Bindemittels gemäß Anspruch 11, **dadurch gekennzeichnet, dass** der Beton ein Gewichtsverhältnis von effizientem Wasser zu trockenem Bindemittel von 0,35 bis 0,4 hat.

13. Selbstverdichtender Beton, der ausgehend von dem Schnellbindemittel gemäß den Ansprüchen 1 bis 10 hergestellt wurde, **dadurch gekennzeichnet, dass** der Beton eine Druckfestigkeit von wenigstens 8 MPa bei 6 Stunden und vorzugsweise 8 MPa bei 4 Stunden sowie wenigstens 24 MPa bei 24 Stunden bei einer Verarbeitungszeit von wenigstens 1 Stunde und vorzugsweise 1,5 bis 2 Stunden hat.

14. Verwendung eines Schnellbindemittels für selbstverdichtenden Beton gemäß einem der Ansprüche 1 bis 10 zum Auffüllen eines Kanals durch Pumpen und/oder Gießen zur vorläufigen Abstützung eines Bauwerks.

15. Verwendung eines Schnellbindemittels für selbstverdichtenden Beton gemäß einem der Ansprüche 1 bis 10 zur dringenden Reparatur eines beschädigten Bauwerks.

16. Verwendung eines Schnellbindemittels für selbstverdichtenden Beton gemäß einem der Ansprüche 1 bis 10 zur Ausführung unter Bedingungen einer Umgebungstemperatur von 10 bis 35 °C.

## Claims

1. A quick binder for self-compacting concrete comprising, based on the binder dry weight:
• 70 to 90% Portland cement,
• 4 to 16% calcium aluminate,
• 4 to 14% calcium sulphate in an anhydrite form,
• an accelerator and a retardant,
• at least an adjuvant comprising a water reductant,
**characterized in that**:
• 0 to 2% hydrated lime Ca(OH)₂ may be added,
• the water reductant comprises at least a superplasticizer made of a water soluble or water dispersible organic compound, comprising at least a amino-di(alkylene-phosphonic) group and at least a polyoxyalkylated chain or at least one of the salts thereof and wherein said superplasticizer is a compound (I) or a salt of the compound (I), said compound (I) having the formula : 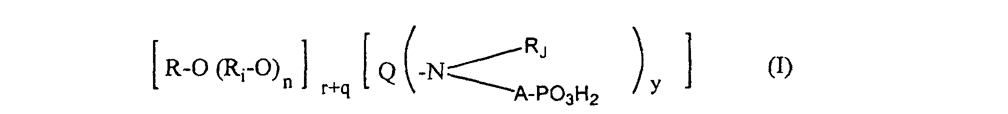
wherein,
• R is a hydrogen atom or a monovalent hydrocarbon group, saturated or unsaturated, comprising 1 to 18 carbon atoms and optionally, one or more heteroatoms; R preferably being a hydrogen atom or a monovalent hydrocarbon group, saturated or unsaturated, comprising 1 to 4 carbon atoms, 50 to 100% of the Rᵢ are ethylene, 0 to 50% of the other optional Rᵢ are similar or different to each other and represent an alkylene such as ethylene, propylene, butylene, amylene, octylene or cyclohexene, or an arylene such as styrene or methylstyrene, the Rᵢ optionally comprising one or more heteroatoms,
• Q is a hydrocarbon group having 2 to 18 carbon atoms and optionally, one or more heteroatoms,
• A is an alkylene group having 1 to 3 carbon atoms, A preferably representing the methylene group,
• the Rⱼ are similar or different to each other and can be selected amongst:
* the A-PO₃H₂ group, A having the above-mentioned meaning,
* and the group : 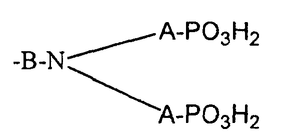
- B indicating an alkylene group comprising 2 to 8 carbon atoms, B preferably representing ethylene or propylene, A having the above-mentioned meaning,
• "n" is a number ranging from 20 to 250,
• "r" is the number of [R-O(Rᵢ-O)ₙ] groups of all the Rⱼ,
• "q" is the number of [R-O(Rᵢ-O)ₙ] groups of Q,
• the "r + q" sum is at the most equal to 3,
• "y" is an integer equal to 1 or 2,
• Q, N and the Rⱼ can form together one or more rings, such (a) cycle(s) being additionally likely to comprise one or more other heteroatoms.

2. A quick binder for self-compacting concrete according to claim 1, **characterized in that** the setting accelerator comprises sodium carbonate and the setting retardant comprises citric acid.

3. A quick binder for self-compacting concrete according to any one of claims 1 to 2, **characterized in that** said adjuvants comprise a setting retardant, preferably at an amount of 0.5 to 2.5% by dry weight of the binder and a setting accelerator preferably at an amount of 0.5 to 2.5% by weight of the binder.

4. A quick binder for self-compacting concrete according to claim 2, **characterized in that** the citric acid is in a monohydrated form.

5. A quick binder for self-compacting concrete according to any one of claims 1 to 4, **characterized in that** the anhydrite has a purity higher than 90%.

6. A quick binder for self-compacting concrete according to claim 5, **characterized in that** the anhydrite comprises anhydrite II.

7. A quick binder for self-compacting concrete according to any one of claims 1 to 6, **characterized in that** the calcium aluminate has a minimum alumina content of 50%.

8. A quick binder according to any one of claims 1 to 7, **characterized in that** said superplasticizer represents about 1.5% by dry weight of the binder.

9. A quick binder for self-compacting concrete according to claim 8, **characterized in that** said superplasticizer is the compound having the formula (II): 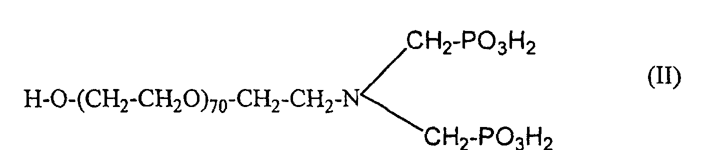 or one of the salts thereof.

10. A quick binder for self-compacting concrete according to any one of claims 1 to 9, **characterized in that** the Portland cement is a quick cement preferably ground to a fineness higher than or equal to 4000 cm²/g.

11. Use of the binder according to any one of claims I to 10 in a self-compacting concrete having a compression strength of 8 MPa minimum at 6 hours and preferably of 8 MPa at 4 hours and of at least 24 MPa at 24 hours, with a workability of I hour minimum and preferably of 1 and a half hours to 2 hours.

12. Use of the binder according to claim 11, **characterized in that** the concrete has an efficient water weight ratio on dry binder ranging from 0.35 to 0.4.

13. A self-compacting concrete made from the quick binder according to claims 1 to 10, **characterized in that** the concrete has a compression strength of 8 MPa minimum at 6 hours and preferably of 8 MPa at 4 hours and of at least 24 MPa at 24 hours, with a workability of 1 hour minimum and preferably of 1 and a half hours to 2 hours.

14. Use of a quick binder for self-compacting concrete according to any one of claims 1 to 10, for filling a groove through pumping and/or casting for a temporarily support of a structure.

15. Use of a quick binder for self-compacting concrete according to any of claims 1 to 10, for urgently repairing a damaged structure.

16. Use of a quick binder for self-compacting concrete according to any one of claims 1 to 10, for implementation in room temperature conditions ranging from 10 to 35°C.
